# EUROPEAN PATENT APPLICATION

(11) **EP 1 928 185 A2**
(43) Date of publication of application: **04.06.2008**
(21) Application number: 07121693.1
(22) Date of filing: 27.11.2007
(51) Int. Cl.: H04N 13/00

(54) **Backlight unit and display apparatus including the same**

(30) Priority: 29.11.2006 KR 20060119173
(71) Applicant: SAMSUNG ELECTRONICS CO., LTD., Suwon-si, Gyeonggi-do (KR)
(72) Inventor: Son, Jung-young, Seongnam, Gyeonggi-do (KR); Saveljef, Vladmir V, Gwangju-si, Gyeonggi-do (KR); Choi, Yong-jin, Seoul (KR); Eom, Hyo-soon, Seoul (KR); Kwack, Kae-dal, Seoul (KR)
(74) Representative: Robinson, Ian Michael

(57) **Abstract**

A display apparatus includes a display panel (20); a light source unit (70) including a plurality of first point light sources (61) and a plurality of second point light sources (62), wherein the point light sources (61, 62) supply light to the display panel (20); an optical film (40) including a plurality of openings (41), wherein each opening exposes a first point light source (61), and is provided between the display panel (20) and the light source unit (70) at a distance from the light source unit (70); and a light source driver (90) which supplies a driving power to the first point light sources (61) if a three-dimensional image is displayed on the display panel, and supplies the driving power to the second point light sources (62) if a two-dimensional image is displayed on the display panel.

## Description

### BACKGROUND OF THE INVENTION

### Field of the Invention

Apparatuses and methods consistent with the present invention relate to a backlight unit and a display apparatus including the backlight unit, and more particularly, to a backlight unit for displaying a three-dimensional image and a display apparatus including the backlight unit.

### Description of the Related Art

Generally, when generating a three-dimensional image by using display panels such as a liquid crystal display (LCD) or a plasma display panel (PDP), a contact-type method in which a viewing zone forming optical plate is overlapped on a front surface of the display panel is used. The viewing zone forming optical plate used in the contact-type method may be a passive type or an active type. In the passive type, lenslets are arranged on a surface in relief, or a grating pattern formed by interfering two collimated beams is printed. In the active type, the lenslets or the gratings are electronically arranged.

In addition, in the passive type, since an interval of the grating pattern or a pitch of the lenslets is greater than a pixel pitch of the display panel, when a two-dimensional image is displayed, it is difficult to recognize the image of the display panel, or the brightness of a screen is deteriorated.

In the active type using a liquid crystal plate, the same function as the passive type is performed in an active state. However, the image of the display panel is not affected, because the liquid crystal plate becomes transparent in an inactive state, and the image is converted to a two-dimensional image. However, since the image of the display panel is displayed under the liquid crystal plate, it appears that the two-dimensional image is submerged, and the brightness is deteriorated due to the poor transmittance of the liquid crystal plate.

To solve the above problem, a method for displaying a three-dimensional image without the viewing zone forming optical plate has been suggested. However, in this method, the two-dimensional image and the three-dimensional image may not be converted.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to the present invention there is provided a display apparatus and a backlight unit as set forth in the appended claims. Other features of the invention will be apparent from the dependent claims, and the description which follows.

The present invention provides a backlight unit for converting two and three-dimensional images and a display apparatus including the backlight unit.

According to an aspect of the present invention, there is provided a display apparatus including a display panel; a light source unit including a plurality of first point light sources and a plurality of second point light sources, wherein the point light sources supply light to the display panel; an optical film including a plurality of openings, wherein each opening exposes a first point light source, and is provided between the display panel and the light source unit at a distance from the light source unit; and a light source driver which supplies a driving power to the first point light sources if a three-dimensional image is displayed on the display panel, and supplies the driving power to the second point light sources if a two-dimensional image is displayed on the display panel.

According to another aspect of the invention, a diameter of each opening is greater than a multiplication product of an emergence angle of an incident light from a point light source and the distance.

According to another aspect of the invention, the light source unit also includes a point light source substrate on which the first point light sources and the second point light sources are arranged, and the first point light sources and the second point light sources are uniformly arranged on the point light source substrate.

According to another aspect of the invention, the light source unit also includes a plurality of first point light source columns in which the first point light sources are arranged, and a plurality of second point light source columns in which the second point light sources are arranged, and the first point light source columns and the second point light source columns are alternately arranged.

According to another aspect of the invention, first light point sources of a first light point source column are misaligned with neighboring second light point sources of a second light point source column.

According to another aspect of the invention, the light source unit is divided into a plurality of light source areas including the first point light sources and the second point light sources, and the light source driver supplies the driving power source based on the light source areas.

According to another aspect of the invention, the optical film includes an antireflection coating layer formed on a surface facing the display panel.

According to another aspect of the invention, the display apparatus also includes a non-scattering layer formed between the optical film and the light source unit.

According to another aspect of the invention, the display panel includes a liquid crystal panel.

According to another aspect of the invention, the point light sources include a light emitting diode or a laser diode.

According to another aspect of the invention, there is provided a backlight unit including a light source unit including a plurality of point light sources and a point light source substrate on which the point light sources are mounted; and a diffusion film including a plurality of openings, each of which exposes a part of a point light source, and is separated from the point light source by a distance.

According to another aspect of the invention, a diameter of each opening is greater than a multiplication product of an emergence angle of an incident light from the point light source and the distance.

According to another aspect of the invention, the light source unit includes a plurality of first point light sources, each corresponding to an opening; and a plurality of second point light sources covered by the diffusion film; wherein the first point light sources and the second point light sources are uniformly arranged on the point light source substrate.

According to an aspect of the invention, the diffusion film includes an antireflection coating layer formed on a surface that does not face the point light source.

According to an aspect of the invention, the backlight unit also includes a non-scattering layer formed between the diffusion film and the light source unit.

### BRIEF DESCRIPTION OF THE DRAWINGS

The above and other aspects of the present invention will become apparent and more readily appreciated from the following description of exemplary embodiments, taken in conjunction with the accompanying drawings, in which:
FIG. 1 shows an exploded perspective view of a display apparatus according to a first exemplary embodiment of the present invention;
FIG. 2 shows a diagram representing an emergence angle of a point light source according to the first exemplary embodiment of the present invention;
FIG. 3 shows a plan view of a light source unit according to the first exemplary embodiment of the present invention;
FIG. 4 shows a sectional view of the IV-IV line shown in FIG. 3; and
FIG. 5 shows a plan view of a light source unit according to a second exemplary embodiment of the present invention.

### DETAILED DESCRIPTION OF EXEMPLARY EMBODIMENTS OF THE INVENTION

Reference will now be made in detail to exemplary embodiments of the present invention which are illustrated in the accompanying drawings, wherein like reference numerals refer to like elements throughout. The exemplary embodiments are described below to explain the present invention by referring to the figures.

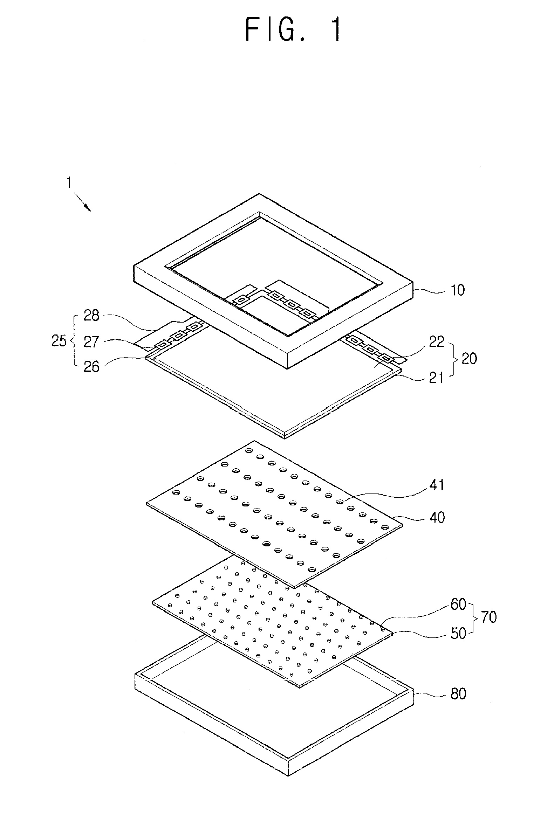

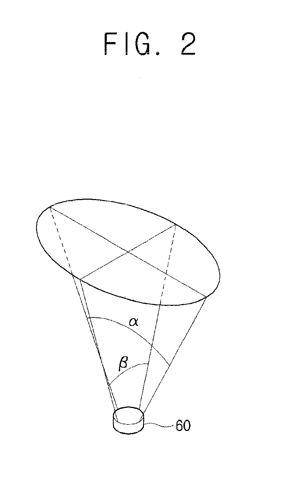

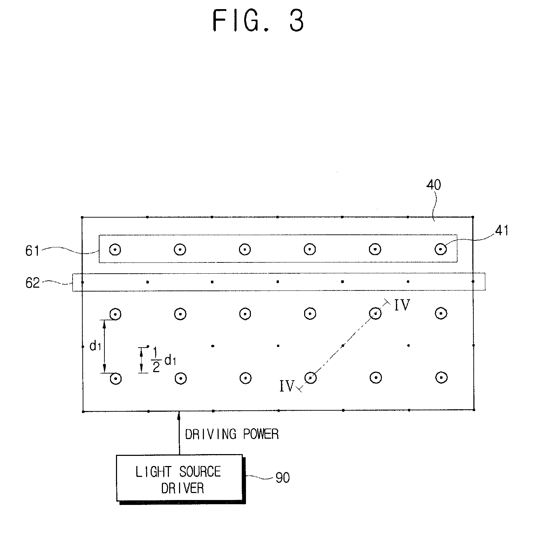

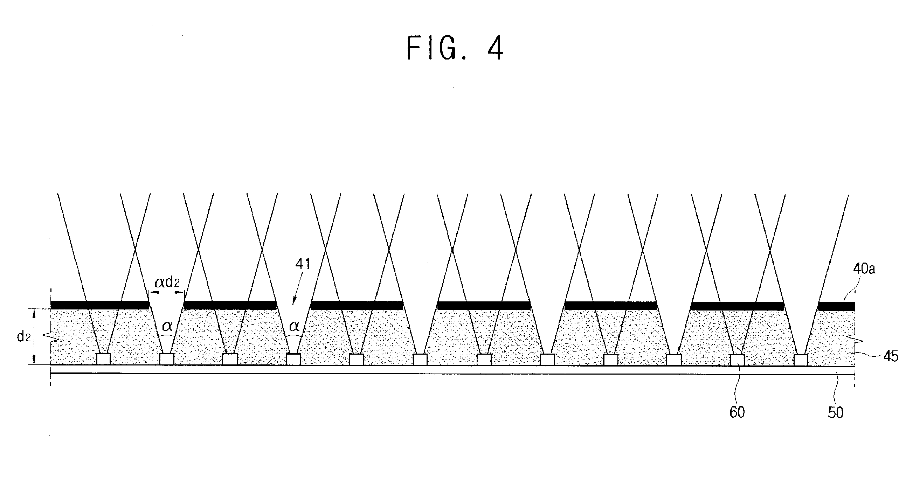

FIG. 1 shows an exploded perspective view of a display apparatus according to a first exemplary embodiment of the present invention, FIG. 2 shows a diagram representing an emergence angle of a point light source according to the exemplary embodiment of the present invention, FIG. 3 shows a plan view of a light source unit according to the exemplary embodiment of the present invention, and FIG. 4 shows a sectional view of the IV-IV line shown in FIG. 3. The display apparatus according to the first exemplary embodiment of the present invention will be described with reference to FIG. 1 to FIG. 4. The display apparatus according to the first exemplary embodiment of the present invention is a liquid crystal display (LCD) 1 including a liquid crystal panel 20. Although the display apparatus is described as an LCD, it is not limited thereto, and any display apparatus receiving a light by using a backlight unit may be used.

The LCD 1 includes the liquid crystal panel 20, an optical film 40, and a light source unit 70 for providing a light to the liquid crystal panel 20. The light source unit 70 includes a light emitting diode circuit board 50 and light emitting diodes 60 mounted on the light emitting diode circuit board 50.

The liquid crystal panel 20 and the light emitting diode circuit board 50 are included in an upper chassis 10 and a lower chassis 80, respectively.

The liquid crystal panel 20 includes a thin film transistor substrate 21 with a plurality of pixels each having a thin film transistor, a color filter substrate 22 facing the thin film transistor substrate 21, a sealant (not shown) for combining substrates 21 and 22 and forming a cell gap, and a liquid crystal layer (not shown) positioned between the substrates 21 and 22 and the sealant (not shown). The liquid crystal panel 20 is formed in a rectangular shape having a long side and a short side. In addition, the liquid crystal panel 20 adjusts an arrangement of the liquid crystal layer to form a screen, and receives a light from the light emitting diode 60 provided at a rear side of the liquid crystal panel 20, since the liquid crystal panel is not a light-emitting element. A driver 25 for applying a driving signal is provided on one side of the thin film transistor substrate 21. The driver 25 includes a flexible printed circuit (FPC) 26, a driving chip 27 mounted on the FPC 26, and a printed circuit board (PCB) 28 connected to one side of the FPC 26. In forming the driver 25, a chip on film (COF) method is used, and related art methods such as a tape carrier package (TCP) or a chip on glass (COG) may be used. In addition, the driver 25 may be formed on the thin film transistor substrate 21 while signal lines are arranged.

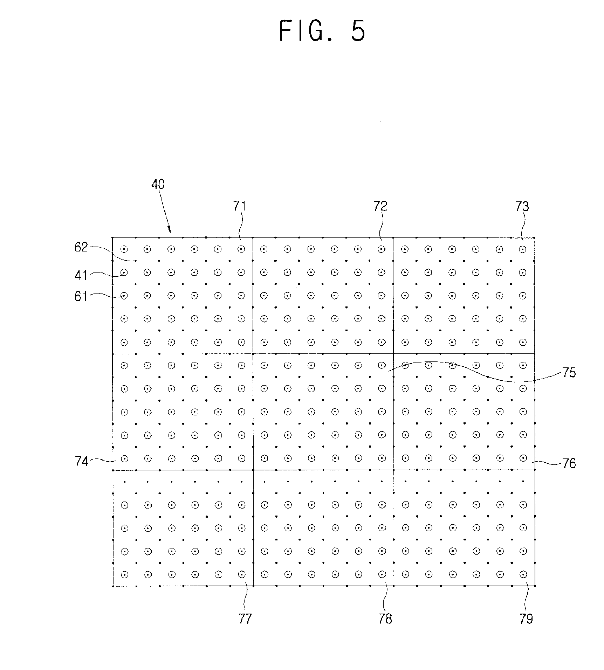

The optical film 40 is provided on an upper part of the light emitting diode circuit board 50 including the light emitting diodes 60, and it includes a plurality of openings 41, each of which exposes a first light emitting diode 61 among the light emitting diodes 60, as shown in FIG. 5. In addition, the optical film 40 is separated from the light emitting diodes 60 by a predetermined distance, and the openings 41 are uniformly arranged on the optical film 40. A first light emitting diode 61 may be provided at a center of an opening 41. The optical film 40 may be formed as a diffusion film for diffusing a light from the light source unit 70 and uniformizing the brightness.

The light emitting diode circuit board 50 is formed in a rectangular shape that is the same shape as the liquid crystal panel 20. Alternatively the light emitting diode circuit board 50 may be formed in a bar shape including a plurality of bars. Since a considerable amount of heat is generated by the light emitting diodes 60, the light emitting diode circuit board 50 may be formed mainly by using aluminum with excellent thermal conductivity. Although not shown in the drawings, the LCD 1 may further include a heat pipe, a heat dissipating fin, and a cooling fan to efficiently dissipate the heat.

The light emitting diodes 60 are mounted on the light emitting diode circuit board 50, and are uniformly disposed throughout a rear side of the liquid crystal panel 20. Although not shown in the drawings, each light emitting diode 60 includes a chip for emitting a light, and a lead for connecting the chip with the light emitting diode circuit board 50. However, each light emitting diode 60 does not include an epoxy bulb surrounding the chip, and the light emitted from the chip is supplied to the liquid crystal panel 20 through an air layer without passing through additional medium. According to another exemplary embodiment of the present invention, a bulb for controlling an emergence angle of the light may be provided. In this case, the bulb may be formed by a uniform material so that the light is not scattered.

As shown in FIG. 2, in the first exemplary embodiment of the present invention, an emergence light of a light emitting diode 60 is diffused to have an upper part with a cone shape, and a cross-section thereof is approximately an oval. An emergence angle α corresponding to a longer axis of the oval is greater than an emergence angle β corresponding to a shorter axis of the oval. The cross-section of the emergence light emitted from the light emitting diode 60 or the emergence angle α varies based on a shape of the chip of the light emitting diode 60. The shape of the chip may include circular shapes such as a circle or an oval, and it may include polygon shapes such as a quadrangle or a hexagon. The cross-section of the light emitted from the light emitting diode 60 is expanded from the shape of the chip, and the emergence angle α is proportional to a wavelength of the light and inversely proportional to a diameter or a diagonal length corresponding to a size of the chip. A diameter of the light emitting diode 60 may be approximately 150 to 250µm, and the emergence angle α of the light emitting diode 60 may be approximately within a range between 10 to 30 degrees.

As shown in FIG. 3, the light emitting diodes 60 may be divided into a plurality of first light emitting diodes 61, each of which corresponds to an opening 41, and a plurality of second light emitting diodes 62 covered by the optical film 40. The first light emitting diodes 61 and the second light emitting diodes 62 are uniformly arranged on the light emitting diode circuit board 50. The first light emitting diodes 61 emit a light through respective openings 41 to display a three-dimensional image, and the second light emitting diodes 62 emit a light through the optical film 40 to display a two-dimensional image.

The light emitting diode circuit board 50 is separated from the liquid crystal panel 20 by a predetermined distance. The light emitted from the first light emitting diodes 61 through the openings 41 produces a three-dimensional image in front of the liquid crystal panel 20. The light emitted from the first light emitting diodes 61 to the liquid crystal panel 20 must not be scattered or diffused; therefore, a diameter of each opening 41 is set based on the emergence angle α of the light. A method for generating a three-dimensional image by adjusting an arrangement of point light sources and pixels without using an additional optical lens has been disclosed in Korean Patent Publication No. 10-389249 by the inventor of the present invention.

The light emitted from the second light emitting diodes 62 is provided to the liquid crystal panel 20 through the optical film 40 to produce the two-dimensional image. Each second light emitting diode 62 may include a configuration of a related art light emitting diode displaying the two-dimensional image, and it may further include a bulb formed on an upper part of the chip.

The first light emitting diodes 61 and the second light emitting diodes 62 are arranged in a plurality of columns, and the respective columns are alternately positioned with predetermined intervals therebetween. That is, a first light emitting diode column and a second light emitting diode column are alternately arranged, and the first light emitting diodes 61 of a first light emitting diode column are misaligned with neighboring second light emitting diodes 62 of a second light emitting diode column. In addition, the second light emitting diodes 62 are shifted by half of a distance between the first light emitting diodes 61 in a row direction and in a column direction. A distance between the second light emitting diode column and the first light emitting diode column is about d1x1/2, and a second light emitting diode 62 is positioned at a center of a quadrangle formed by an arrangement of four first light emitting diodes 61. The quadrangle may include a square, a rectangular shape, or a parallelogram.

In addition, second light emitting diodes 62 are arranged along a margin of the light emitting diode circuit board 50, to compensate a brightness reduced at a margin of the liquid crystal panel 20 by the chassis 10 and 80.

As shown in FIG. 4, the diameter of the opening 41 corresponding to a first light emitting diode 61 corresponds to a product (αxd2) which multiplies a distance d2 from the optical film 40 to the first light emitting diode 61 by a longer axis emergence angle α of the first light emitting diode 61. The diameter may be greater than the product (axd2) of the distance d2 and the longer axis emergence angle α of the light emitting diode 60 to sufficiently obtain the emergence angle α and prevent light scattering.

An antireflection coating layer 40a is formed on one surface of the optical film 40 facing the liquid crystal panel 20. Among the emitted light, the light reflected toward the light source unit 70 penetrates through the optical film 40 and is used as the light source again, and therefore a light loss may be reduced.

In addition, a non-scattering layer 45 is formed between the optical film 40 and the light source unit 70 to prevent light scattering. The non-scattering layer 45 may be formed by a uniform material.

Although not shown in the drawings, a reflecting plate may be provided on the light emitting diode circuit board 50, and may not include a light emitting diode 60. The reflecting plate reflects the incident light from a lower part and supplies the light to the optical film 40. In addition, the reflecting plate may be formed by polyethylene terephthalate (PET) or polycarbonate (PC), and it may be coated by silver or aluminum. Further, the reflecting plate may be thick, so it is not affected by heat generated by the light emitting diode 60.

While the light source unit 70 includes a point source as the light emitting diode 60, it may alternatively include a laser diode.

The LCD 1 further includes a light source driver 90 for supplying a driving power to the light source unit 70. The light source driver 90 selectively supplies a driving voltage to the first light emitting diodes 61 or the second light emitting diodes 62 based on an image displayed on a liquid crystal panel 20. As described above, the driving power is supplied to the first light emitting diodes 61 and the second light emitting diodes 62 are turned off when a three-dimensional image is displayed. Conversely, the driving power is supplied to the second light emitting diodes 62 and the first light emitting diodes 61 are turned off when a two-dimensional image is displayed.

FIG. 5 shows a plan view of the light source unit 70 according to a second exemplary embodiment of the present invention. As shown in FIG. 5, the light source unit 70 is divided into a plurality of light source areas 71 to 79, and the respective light source areas 71 to 79 may be independently driven. For example, the first light emitting diodes 61 are turned on only in the first light source area 71, and the second light emitting diodes 62 are turned on only in the other light source areas 72 to 79. Therefore, two-dimensional and three-dimensional images may be simultaneously displayed on the liquid crystal panel 20. The light source driver 90 supplies the driving power to the appropriate first light emitting diodes 61 and second light emitting diodes 62.

In addition, the driving power may be supplied to the first light emitting diodes 61 in the light source area displaying the three-dimensional image, and the driving power may be supplied to the first light emitting diodes 61 and the second light emitting diodes 62 in the light source area displaying the two-dimensional image.

Further, the light source areas 71 to 79 are illustrated in an exemplary embodiment of the present invention to exemplify that the light source unit 70 may be controlled to display different images, and they are not limited thereto. That is, a user may select an area to adjust a dimension of an image.

In an exemplary embodiment of the present invention, a light source may be efficiently changed based on a two-dimensional or a three-dimensional image by using a point light source arrangement, and the light source may be efficiently controlled when the two-dimensional and three-dimensional images are simultaneously displayed.

As described above, according to exemplary embodiment of the present invention, the backlight unit for efficiently converting two-dimensional and three-dimensional images and the display apparatus including the backlight unit may be provided.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a display panel (20);
a light source unit (70) comprising a plurality of first point light sources (61) and a plurality of second point light sources (62), wherein the point light sources (61, 62) supply light to the display panel (20);
an optical film (40) comprising a plurality of openings (41), wherein each opening exposes a first point light source (61), and is provided between the display panel (20) and the light source unit (70) at a distance from the light source unit (70); and
a light source driver (90) which supplies a driving power to the first point light sources (61) if a three-dimensional image is displayed on the display panel (20), and supplies the driving power to the second point light sources (62) if a two-dimensional image is displayed on the display panel (20).

2. The display apparatus of claim 1, wherein a diameter of each opening (41) is greater than a multiplication product of an emergence angle of an incident light from a point light source (61) and the distance.

3. The display apparatus of claim 1, wherein the light source unit (70) further comprises a point light source substrate (50) on which the first point light sources (61) and the second point light sources (62) are arranged, and the first point light sources (61) and the second point light sources (62) are uniformly arranged on the point light source substrate (50).

4. The display apparatus of claim 3, wherein the light source unit (70) further comprises a plurality of first point light source columns in which the first point light sources (61) are arranged, and a plurality of second point light source columns in which the second point light sources (62) are arranged, and the first point light source columns and the second point light source columns are alternately arranged.

5. The display apparatus of claim 4, wherein first point light sources (61) of a first point light source column are misaligned with neighboring second point light sources (62) of a second point light source column.

6. The display apparatus of claim 1, wherein the light source unit is divided into a plurality of light source areas (71-79) comprising the first point light sources (61) and the second point light sources (62), and the light source driver (90) supplies the driving power source based on the light source areas (71-79).

7. The display apparatus of any preceding claim, wherein the optical film (40) comprises an antireflection coating layer formed on a surface facing the display panel (20).

8. The display apparatus of any preceding claim, further comprising a non-scattering layer formed between the optical film (40) and the light source unit (70).

9. The display apparatus of any preceding claim, wherein the display panel (20) comprises a liquid crystal panel.

10. The display apparatus of any preceding claim, wherein the point light sources (61, 62) comprise a light emitting diode or a laser diode.

11. A backlight unit comprising:
a light source unit (70) comprising a plurality of point light sources (60) and a point light source substrate (50) on which the point light sources (60) are mounted; and
a diffusion film (40) comprising a plurality of openings (41), each of which exposes a part of a point light source (60), and is separated from the point light source (60) by a distance.

12. The backlight unit of claim 11, wherein a diameter of each opening (41) is greater than a multiplication product of an emergence angle of an incident light from the point light source (60) and the distance.

13. The backlight unit of claim 11 or 12, wherein the light source unit (70) comprises:
a plurality of first point light sources (61), each corresponding to an opening (41); and
a plurality of second point light sources (62) covered by the diffusion film (40);
wherein the first point light sources (61) and the second point light sources (62) are uniformly arranged on the point light source substrate (50).

14. The backlight unit of claim 11, 12 or 13, wherein the diffusion film (40) comprises an antireflection coating layer formed on a surface that does not face the point light source (60).

15. The backlight unit of claim 11, 12, 13 or 14, further comprising a non-scattering layer formed between the diffusion film (40) and the light source unit (70).
